# FASCICULE DE BREVET EUROPEEN

(11) **EP 1 118 200 B1**
(45) Date de publication et mention de la délivrance du brevet: **27.02.2008**
(21) Numéro de dépôt: 99946261.7
(22) Date de dépôt: 29.09.1999
(51) Int. Cl.: H04M 1/72

(54) **POSTE MOBILE DE TRAITEMENT DE DONNEES A MODULE DE COMMUNICATION LOCALE**
MOBILFUNKTELEFON ZUR DATENVERARBEITUNG MIT LOKALEM KOMMUNIKATIONSMODUL
MOBILE STATION FOR PROCESSING DATA WITH LOCAL COMMUNICATION MODULE

(30) Priorité: 30.09.1998 FR 9812228
(43) Date de publication de la demande: 25.07.2001
(73) Titulaire: Inria Institut National de Recherche en Informatique et en Automatique, 78153 Le Chesnay Cedex (FR)
(72) Inventeur: BANATRE, Michel, F-35111 La Fresnais (FR); WEIS, Frédéric, F-35400 Saint Malo (FR)
(74) Mandataire: Plaçais, Jean Yves
(86) Numéro de dépôt international: PCT/FR1999/002315
(87) Numéro de publication internationale: WO 2000/019687

(56) Documents cités:
- EP-A- 0 639 930
- EP-A- 0 843 179
- WO-A-96/22663
- WO-A-97/21318
- WO-A-97/29597

## Description

L'invention concerne la télé-transmission de données, ou messages, entre des postes.

Dans les systèmes actuellement connus, l'établissement d'une liaison de télécommunication entre postes est tributaire de contraintes strictes, qui impliquent en général le soutien d'un moyen matériel, réseau informatique ou station maîtresse en télécommunications.

L'émergence de postes miniaturisés et mobiles, associés à des capacités de communication sans fil, a amené le développement de nouvelles applications, notamment dans le domaine de ce que l'on appelle "ubiquité", où les postes mobiles communiquent localement. Actuellement, ceci n'est possible qu'avec des infrastructures spécialisées, similaires à celles des téléphones mobiles.

Une approche de ce problème est présentée dans "Piconet - Embedded Mobile networking", F. Bennett et al., IEEE personal communications, 4(5), 1997. Toutefois, si cette approche vise assez précisément les aspects matériels de la liaison de télécommunication, pour le reste, elle demeure de type "réseau local ad hoc", avec toutes les contraintes que cela implique.

La présente invention vient améliorer la situation.

L'invention part d'un poste de traitement de données, tel que divulgué dans le document Infrared Data Association, Serial Infrared Link Access Protocol, Version 1.1, June 16, 1996 destiné à être porté par un humain ou un porteur automobile. De façon connue, ce poste comprend des moyens de traitement de données, ainsi que des moyens de communication, capables d'échanger des données de traitement avec un autre poste disposant de moyens de communication compatibles.

Ces moyens de communication comprennent :
* un module d'émission/réception par voie d'ondes, capable de fonctionner selon au moins un protocole spécifique d'émission/réception de données,
* un module de surveillance apte à surveiller une zone de dimension choisie, pour y détecter la présence d'autres postes compatibles, et
* un module de communication locale apte à coopérer avec le module de surveillance, le module d'émission/réception et les moyens de traitement pour mettre en fonction ledit module d'émission/réception selon ledit protocole spécifique, en cas de détection d'un autre poste par le module de surveillance, puis initialiser une liaison dynamique avec cet autre poste, pour échanger avec celui-ci les données de traitement, selon le format du protocole spécifique, et maintenir cette liaison tant que ledit autre poste est détecté.

Selon une définition générale de l'invention, le module de communication locale est apte à former un message d'initialisation, destiné au poste détecté, et comprenant un code indicateur de phase d'initialisation en communication locale, ainsi qu'au moins un code pour désigner un protocole de communication spécifique proposé pour l'échange de données, de sorte qu'à réception dudit message d'initialisation, le poste détecté puisse placer son module d'émission/réception dans un état permettant l'échange des données selon le format du protocole spécifique désigné.

D'autres caractéristiques et avantages de l'invention apparaîtront à l'examen de la description détaillée ci-après, et des dessins annexés, sur lesquels :
- La figure 1 est un schéma fonctionnel illustrant la structure d'un poste selon la présente invention ;
- La figure 2 est un logigramme relatif à la fonction "détection de présence" ;
- La figure 3 est un logigramme relatif à la fonction "évaluation de distance" ;
- La figure 4 est un logigramme relatif à l'identification minimale entre deux postes ;
- La figure 5 est un logigramme du fonctionnement général du module de communication locale ; et
- La figure 6 est un schéma spatial montrant comment deux postes selon l'invention entrent en communication locale.

Les dessins annexés sont, pour l'essentiel, de caractère certain. En conséquence, ils pourront non seulement servir à compléter celle-ci, mais aussi contribuer à la définition de l'invention le cas échéant.

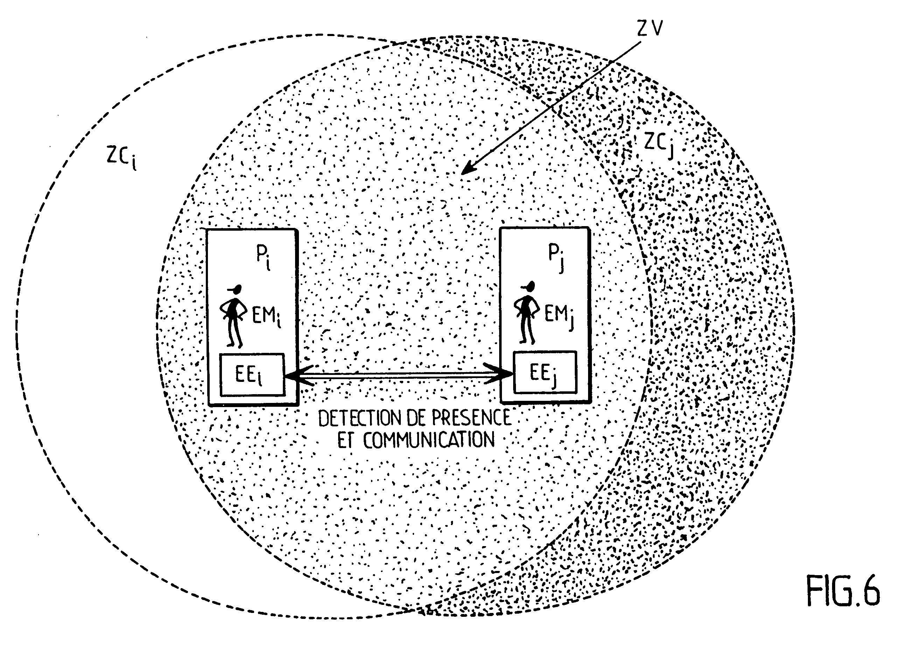

L'invention s'applique à un porteur Pᵢ (ou entité porteur) qui comporte une entité mobile EMᵢ, laquelle peut être un être humain ou bien un porteur automobile comme par exemple un véhicule automobile ou un robot, énergétiquement autonome; auquel est associé un équipement embarqué EEᵢ (figure 6).

C'est, pour l'essentiel, l'équipement embarqué EEᵢ qui est chargé de la "communication par voisinage", laquelle s'effectue en principe avec des équipements embarqués semblables, mais peut aussi intervenir avec tout autre poste disposant de moyens de communication compatibles.

L'équipement embarqué EEᵢ est un calculateur qui comporte des éléments physiques et des éléments logiciels.

Les éléments physiques comprennent au moins un module de détection de présence (ou encore module de surveillance) 40 et un module d'émission/réception de données 20, ainsi que de préférence un module d'évaluation de distance 50. Ces trois modules sont des représentations fonctionnelles des moyens concrets qui peuvent être utilisés, et qui vont forcément comprendre un ou des transducteurs entre le type d'ondes utilisé et des signaux électriques.

Bien que divers types d'ondes non électromagnétiques puissent être utilisés, on considérera ci-après à titre d'exemple qu'il s'agit d'ondes électromagnétiques, et plus précisément d'ondes radio-électriques.

Le calculateur dispose d'un système d'exploitation prenant en compte les contraintes d'embarquabilité, en particulier en ce qui concerne la gestion de la consommation électrique et/ou le respect de contraintes temporelles. On peut prendre par exemple un ordinateur portable léger, muni par exemple d'un système d'exploitation tel que Linux, Nucleus, Chorus, VxWorks, ou Windows CE.

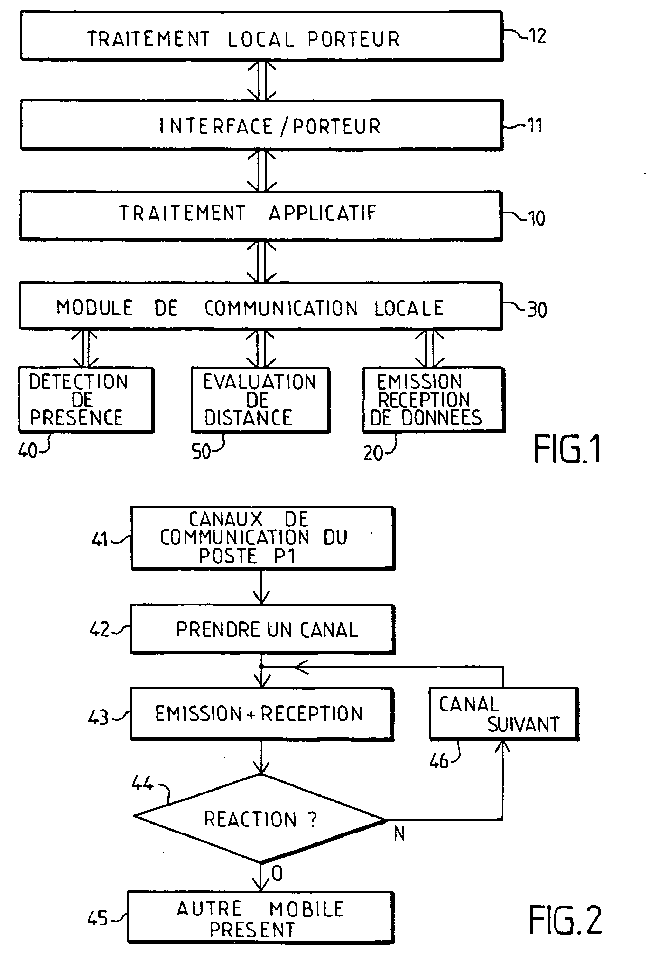

Les trois modules 20, 40 et 50 opèrent sous le contrôle d'un module de communication locale, qui, pour sa part, peut être purement logiciel. Ils communiquent avec un traitement dit "applicatif", c'est-à-dire correspondant à un besoin spécifique du poste Pᵢ. Pour l'exécution de ce traitement, il est prévu une interface 11 par rapport au porteur. Enfin, dans la mesure où le porteur est autre qu'un être humain, il pourra réaliser lui-même des opérations relatives au traitement, schématisées dans le bloc-module 12 de la figure 1.

Ce "traitement applicatif" réalisé par la conjonction des moyens 10, 11 et 12 peut revêtir de nombreuses formes différentes. Il s'agit du besoin d'échanger des informations entre postes voisins. Ce traitement peut être lié, plus ou moins étroitement, aux mouvements respectifs des deux postes concernés.

Dans la version où ils utilisent tous des moyens radio-électriques, les modules 20, 40 et 50 sont tributaires d'un dispositif matériel à antenne, en principe omnidirectionnel, susceptible de pourvoir une fonction d'émission/réception par canaux de communication, correspondant à différentes possibilités. Ces canaux de communication peuvent être définis par multiplexages fréquentiels, ou d'une autre manière.

On décrira maintenant la détection de présence, en référence à la figure 2.

L'opération 41 consiste à scruter un par un l'ensemble des canaux de communication dont dispose le poste P1 concerné qui veut instaurer une liaison locale. A l'opération 42, on choisit un canal. A l'opération 43, on procède à un test de réponse sur ce canal, consistant par exemple à une émission suivie d'une écoute en réception sur le même canal, dans l'attente à l'étape 44 d'une possible réaction d'un poste tiers pendant la phase d'écoute. En l'absence de réaction, on scrute le canal suivant. En présence d'une réaction, l'étape 45 indique qu'un autre mobile est présent dans la zone d'émission/réception (ou zone de surveillance) du porteur souhaitant établir une liaison locale.

L'étape d'émission/réception 43 peut être conduite de plusieurs manières, en principe avec une composante aléatoire au niveau de l'instant d'émission, le cas échéant de la durée de réception. Il s'agit de l'émission spontanée d'un signal facile à reconnaître dans le canal, puis de l'attente d'une émission spontanée ou en réponse d'un autre poste sur le même canal.

En variante, ces "émissions spontanées" peuvent être réalisées sur un canal spécial, principalement destiné à cette fonction, auquel cas l'émission spontanée de chacun des postes indique aussi de façon codée le ou les canaux de communication sur lesquels il est apte à opérer.

Des "émissions spontanées" de ce genre sont déjà connues par ailleurs, sous la forme des signaux dits "squitters", utilisés dans les systèmes pour éviter les collisions de trafic aérien, dits TCAS (Trafic Collision Avoidance Systems).

Bien entendu, le processus peut s'arrêter lors de la détection d'un autre mobile présent en 45, afin de traiter les possibilités de communication avec ce mobile, ou continuer méthodiquement sur tous les canaux, le traitement des mobiles repérés étant effectué ensuite.

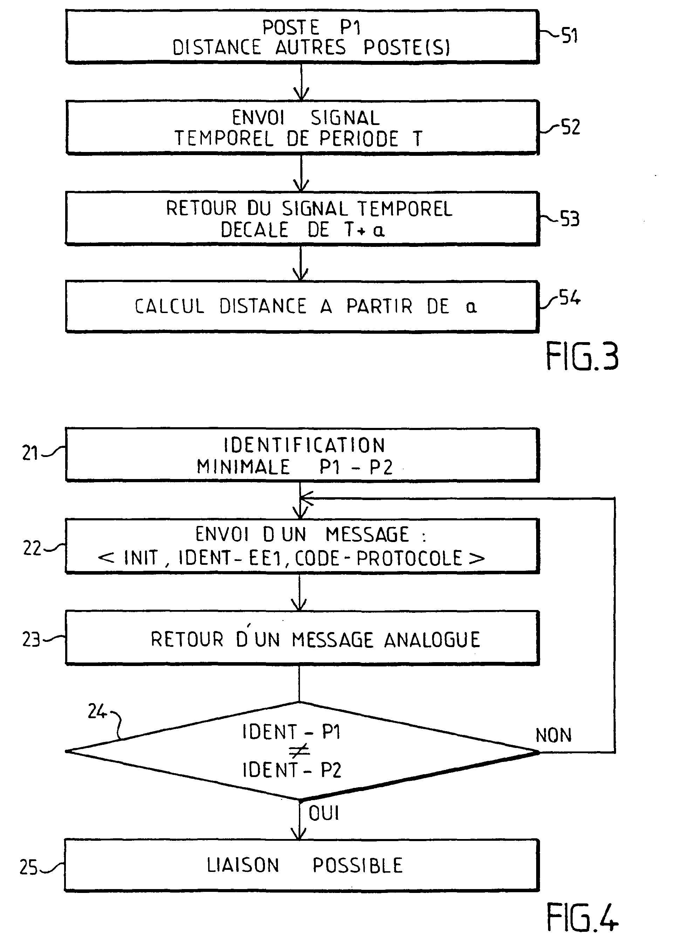

Dans les cas où l'on souhaite évaluer la distance qui sépare le porteur émetteur d'un porteur détecté, on prévoit, comme indiqué précédemment, un module d'évaluation de distance 50 (voir figure 1). Celui-ci va être décrit maintenant en référence à la figure 3.

Ce module travaille par l'envoi d'un signal temporel de période T, par exemple un code pseudo-aléatoire de longueur T, et convenu à l'avance. L'instant de départ d'émission de ce code est de préférence lui aussi aléatoire. Par contre, tout poste compatible est muni d'une fonction capable de retourner le signal temporel décalé de sa période T ou d'un multiple de celle-ci, et bien entendu d'un temps a égal au double du temps de trajet aller-retour des ondes électromagnétiques entre les deux postes. Ce qui se passe aux étapes 52 et 53 de la figure 3, après quoi l'étape 54 consiste en un calcul de la distance entre les deux postes à partir de a, de façon connue. De façon également connue, on peut en déduire la vitesse radiale entre les deux postes.

Le dispositif de la figure 3 est intéressant en ce qu'il peut être mis en oeuvre par les mêmes moyens électromagnétiques que ceux utilisés par les autres modules 20 et 40.

Une variante consiste à prévoir un dispositif radar léger, complètement séparé, comme il en existe déjà à bord des véhicules, par exemple pour des fonctions d'anti-collision (projet "PROMETHEE" de la Communauté Européenne, et prototypes ou véhicules de série des principaux constructeurs automobiles). Ce radar peut fonctionner sous la forme d'un radar Doppler à impulsions, ou encore en modulation linéaire de sa fréquence porteuse. L'intérêt du radar est qu'il peut fournir non seulement la distance et la vitesse radiale, mais aussi permettre une résolution latérale en distance et/ou en vitesse, selon deux ou trois dimensions.

Son inconvénient est par contre qu'il ne permet pas intrinsèquement de savoir que l'autre poste (la cible) est du type "poste disposant de moyens de communication compatibles". Toutefois, il est possible d'utiliser par exemple à la fois le mécanisme décrit en référence à la figure 3 et un radar, puis pour approcher ces informations, à partir de la distance et de la vitesse radiale obtenues dans les deux cas, de manière à discriminer, parmi les "cibles" du radar, celles qui correspondent effectivement à des postes aptes à communiquer selon l'invention.

Les fonctions du module d'émission/réception de données 20 commencent de préférence par une identification minimale entre les deux postes.

Cette fonction sera décrite en référence à la figure 4, dont l'étape 21 rappelle ladite fonction. L'identification minimale consiste en l'émission spontanée d'un message dont la forme est la suivante : <init, ident-EEₗ, code protocole>. Les symboles "<" et ">" sont ici des délimiteurs d'expression.

Le code de début <init> est de type logique ou booléen. Il indique que l'on se trouve en phase d'initialisation d'une communication minimale.

Le code <Ident-EEₗ> est un identifiant local, par exemple un numéro, choisi par EEᵢ pour communiquer avec un autre poste EEⱼ.

Enfin, le code <protocole> est un nom ou identifiant de protocole spécifique commun, parmi l'ensemble des protocoles dont dispose l'entité EEᵢ. Il faudra bien entendu que ce protocole soit commun à EEᵢ et EEⱼ. Ceci suppose que les protocoles sont identifiés de la même manière par l'ensemble des équipements embarqués susceptibles de communiquer, chose tout à fait aisée à mettre en oeuvre.

On considère les deux entités qui ont émis et/ou reçu un tel message à un moment donné. Chacune connaît son propre <ident-EEᵢ>, et le <ident-EEⱼ> qu'elle a reçu. Celle de ces entités qui possède le plus petit numéro d'identification <ident-EEₓ> possède, par exemple, l'initiative de continuer la communication avec l'autre entité. Elle choisit le protocole commun (qualifié alors de spécifique) pour la communication, qui peut alors se mettre en place entre les deux équipements embarqués qui participent à la communication par voisinage selon un couple <i,j>.

La présence de <ident-EEₗ> est avantageuse, mais non impérative. En l'absence de <ident-EEᵢ>, on peut prévoir que la plus rapide (ou la plus proche) des entités possède l'initiative de continuer la communication, avec un mécanisme d'arbitrage de collision le cas échéant.

En variante, les postes peuvent émettre de façon périodique un message spécifique de type "chien de garde", destiné à avertir de leur présence les autres postes de même type qui se trouvent dans leur zone de surveillance.

Lorsque plus de deux entités sont concernées, par exemple {i,j,k} on procède de même deux à deux, ce qui peut aboutir à trois couples de communication locale <i,j>,<i,k> et <j,k>.

On notera, tout particulièrement, ce qui suit :
- aucune information relative à l'identité de postes communicants n'est divulguée par la mise en place d'une communication, et l'anonymat peut être préservé si nécessaire. L'identifiant <ident-EEᵢ> ne sert qu'à identifier un équipement embarqué pour la communication en cours. En d'autres termes, l'usage de ces identifiants a pour effet qu'un équipement embarqué EEᵢ sait qu'il communique avec un autre équipement embarqué EEⱼ et rien de plus.
- la seule information commune à l'ensemble des équipements embarqués est la structure et l'interprétation ou signification du contenu du message et l'identification des protocoles de communication.

Comme l'indique la figure 4, il est nécessaire que les <ident-EEᵢ> soient uniques, c'est-à-dire propres à chaque équipement embarqué, sans pour autant être définis à l'avance. Une solution simple consiste à engendrer localement un <ident-EEᵢ> pour chaque poste à partir d'un générateur de nombres aléatoires, sur une gamme suffisamment vaste de nombres possibles. Immédiatement au commencement de la liaison, le poste "gagnant" peut déterminer s'il existe des <ident-EEᵢ> identiques, au test 24 de la figure 4, et forcer alors la reprise de l'identification minimale à partir de l'étape 22 pour tous les postes. Il lui suffit par exemple de renvoyer un message <init> suivi d'un code d'identifiant invalide et/ou d'un code protocole invalide.

Dans la mesure où tous les identifiants sont différents en sortie de l'étape 24, une liaison 25 est possible pour le code protocole choisi à cet effet.

Bien entendu, une identification personnalisée peut être mise en oeuvre par la suite, lorsque la nature de la communication locale exige la perte de l'anonymat, par exemple lors de l'échange de données privées.

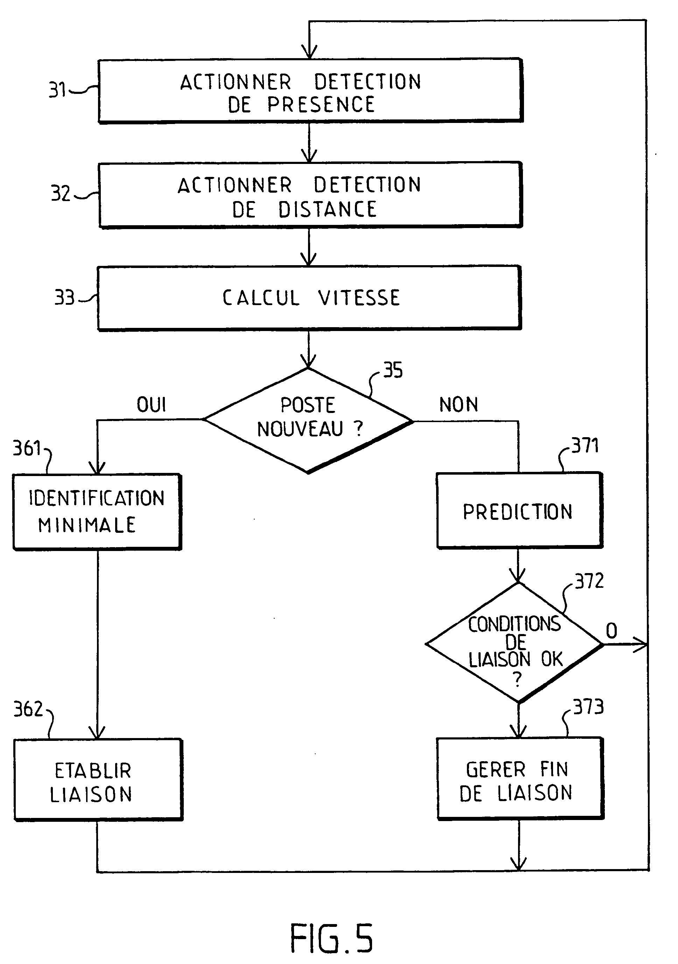

Les modules 20, 40 et 50 sont sous le contrôle du module de communication locale 30, qui opère selon le schéma de la figure 5.

Les trois premières étapes 31, 32 et 33 de la figure 5 consistent à actionner la détection de présence du module 40, actionner (éventuellement) la détection de distance du module 50 et, le cas échéant en déduire (étape 33) un calcul de vitesse, qui peut être soit la vitesse radiale, soit une vitesse plus élaborée, bi- voire tri-dimensionnelle.

Ces opérations sont indiquées comme séquentielles sur la figure 5, mais bien entendu elles peuvent être gérées de façon autonome dans un système multi-tâches, ou bien par interruption dans un système mono-tâche.

Si le poste repéré est un poste nouveau, le test 35 va induire une identification minimale en 361, conformément à ce qui a été décrit à propos de la figure 4. Cela se traduit en principe par l'établissement d'une liaison avec ce nouveau poste, ou bien l'introduction de ce nouveau poste dans un ensemble de liaisons de communication locale déjà existantes. Quoiqu'il en soit, les liaisons sont créées par couples <i,j>, comme déjà décrit.

Si au contraire à l'étape 35, il s'agit d'un poste déjà présent dans la liaison de communication locale existante, on procède aux étapes 371 à 373.

L'étape 371, optionnelle, consiste en une prédiction de la situation physique du poste dont il s'agit à l'intérieur de la zone de travail ou "zone de vigueur" de la liaison de communication locale en cours. Cette étape 371 est plus particulièrement adaptée aux équipements munis d'un module de d'évaluation de distance 50). Cette prédiction peut être réalisée d'une manière connue si l'on dispose de données radar. Cette prédiction a plus particulièrement comme objet d'estimer le temps pendant lequel va se trouver dans la zone d'émission/réception (ou "zone de vigueur"). En effet, cette information temporelle peut permettre au porteur émetteur de déterminer s'il va disposer de suffisamment de temps pour échanger des informations avec le poste détecté, et par conséquent s'il est utile ou non d'établir une liaison avec ledit poste détecté.

Si l'on ne dispose que de données de distance et de vitesse radiales, mais non d'angle, il reste possible de gérer la "zone de vigueur", par exemple en considérant une sphère autour de chaque poste, et en procédant par intersection de ces sphères. La liaison déjà existante permet l'échange de données requis pour la réalisation de ladite intersection entre sphères.

Il n'a pas été question jusqu'à présent du "traitement applicatif" qui peut être quelconque. Mais celui-ci suppose des conditions exprimées de différentes manières. La condition la plus simple est la durée requise pour achever de façon certaine un traitement, compte tenu d'un besoin, généralement connu en informatique, et dit "atomicité". On sait que cette "atomicité" veut qu'une opération qui est commencée soit ou bien terminée de façon certaine pour tous les intervenants, ou bien considérée comme non effectuée par tous les intervenants.

A partir de là, le test 372 va déterminer si, compte tenu de la prédiction éventuellement effectuée en 371, ou d'autres grandeurs disponibles, les conditions de la liaison en cours sont satisfaisantes pour terminer le traitement applicatif, ou le plus souvent, une partie définie comme "atomique" de celui-ci. Si la réponse est oui, le traitement se poursuit, et on pourra retourner à l'étape 31. Si la réponse est non, un traitement spécial, illustré en 373, va gérer la fin de la liaison, voire tenter de faire en sorte que cette fin de liaison soit différée. Gérer la fin de la liaison consiste à informer le ou les postes sortant de la "zone de vigueur" de ceux qui ne vont plus faire partie de la liaison de communication locale. Différer la fin de la liaison consiste en ce qu'on enverra au poste un ultime message le sollicitant de modifier son mouvement ou d'autres paramètres afin qu'il satisfasse plus longtemps que ne le laisse penser la prédiction actuelle les conditions pour que les liaisons locales avec ce poste demeurent implémentées.

En référence à la figure 5, le dialogue, c'est-à-dire la liaison de communication locale peut se terminer de manière explicite, par accord tacite entre les équipements embarqués EEᵢ et EEⱼ concernés. Mais il peut également s'interrompre de manière imprévue, par rapport à l'estimation selon laquelle EEᵢ ou EEⱼ sort rapidement du voisinage. Dans ce cas, on récupère seulement une information partielle, qui peut être utilisable ou non, ce qui peut donner lieu à une interprétation erronée de son contenu. Le traitement d'erreur dépend de l'application.

Comme déjà indiqué, les équipements embarqués EEᵢ peuvent devoir dévoiler leur véritable identité (c'est-à-dire en pratique celle du porteur qui les accompagne), dans le but d'échanger des données que l'on considère donc comme "privées". Pour cela, il convient de mettre en place une identification personnalisée. On utilisera alors, de façon connue, un protocole d'identification et d'authentification. Il est important de noter que ce protocole doit pouvoir s'exécuter uniquement à partir d'informations stockées localement dans les équipements embarqués EEᵢ et EEⱼ concernés.

Il est important de remarquer que dans la plupart des cas, l'information échangée dans le cadre du dialogue que permet une liaison de communication locale va pouvoir faire évoluer le comportement de l'utilisateur ou du porteur, et en règle générale ce sera le plus souvent sa trajectoire qui sera modifiée.

Sur la figure 6, le poste Pᵢ est associé à une zone de communication ZCᵢ, tandis que le poste Pⱼ est associé à une zone de communication ZCⱼ. La zone de vigueur ZV est l'intersection entre les zones ZCᵢ et ZCⱼ.

Ainsi, et sans aucun besoin d'une architecture ni d'implantation de station fixe, l'invention permet de créer ce que l'on peut appeler un système d'informations spontanées ou SIS, dans lequel un équipement embarqué EEᵢ peut communiquer par voisinage avec d'autres équipements embarqués EEⱼ. Bien entendu, un équipement embarqué EEᵢ peut appartenir simultanément à plusieurs systèmes d'informations spontanées, éventuellement indépendants les uns des autres.

Les moyens décrits permettent notamment qu'un équipement embarqué EEᵢ, qui est mobile, puisse entrer ou sortir spontanément de la zone de communication des autres équipements EEⱼ. Cela implique qu'un système d'informations spontanées peut être engendré spontanément ou étendu spontanément, dès lors que deux EEᵢ peuvent communiquer par voisinage. On aura disparition éventuelle d'un système d'informations spontanées lorsqu'il se réduit à deux EEᵢ, et que celles-ci ne peuvent plus communiquer par voisinage, ou bien entendu par convention tacite entre les EEᵢ appartenant à ce système d'informations spontanées, comme déjà décrit.

En bref, l'évolution (en nombre d'EEᵢ impliqués) et la disparition d'un système d'informations spontanées sont entièrement dynamiques. Elles ne dépendent que de la localisation des EEᵢ susceptibles de communiquer par voisinage, et les conséquences de l'évolution d'un système d'informations spontanées sont gérées uniquement par les EEᵢ impliqués.

Un SIS se construit donc par communication directe, sans fil, et sans qu'il faille masquer les "imperfections" telles que les taux d'erreur, les coupures, ou les variations de qualité des liaisons. En fait, un SIS se construit à l'aide d'une prise en compte des imperfections.

Un SIS est de ce fait radicalement différent d'un réseau de type "ad hoc", lequel s'appuie sur une communication directe, sans fil, mais qui masque les déconnexions de manière à fournir un schéma de routage dynamique entre des noeuds mobiles du réseau.

Comme indiqué précédemment, les SIS se construisent par instauration de couples de communication locale <i,j>,<i,k> et <j,k>. Il est donc possible de lier un SIS de type (i,n) comprenant n noeuds (i= l à n) à un, ou plusieurs autres, SIS de type (i,p) comprenant p noeuds (i= l à p), de manière à constituer un SIS de type (n,p) dans lequel n noeuds peuvent dialoguer avec p noeuds.

La gestion dynamique d'un tel SIS (n,p) peut reposer, par exemple, sur une analyse géométrique liée aux positionnements respectifs des différents noeuds les uns par rapport aux autres. Un ou plusieurs noeuds centraux, capables de communiquer avec un maximum (prédéfini) de noeuds voisins, et donc à même de gérer la composition d'un SIS, peuvent être déterminés dynamiquement, par exemple périodiquement. Les noeuds centraux peuvent être obtenus de façon barycentrique, par exemple.

En ce qui concerne le mode de transmission par voie d'ondes, le Demandeur préfère actuellement une technique de transmission d'ondes radio-électriques avec modulation à spectre étalé, comme décrit par exemple dans T.P. Burch, K.Ho, F. Kunzinger, L. Roberts, W. Shanks, L. Tantillo. Digital Radio for Mobile Applications. AT&T Technical Journal, pages 19-26, July-August 1993.

L'invention est susceptible de très nombreuses applications, notamment dans les domaines de l'automobile, de la robotique mobile, ainsi que des systèmes d'informations de proximité entre personnes.

Dans le domaine de l'automobile, il est intéressant de mettre en oeuvre des systèmes anti-collision (au sens le plus large). On peut prévoir par exemple que seules les automobiles voisines d'une automobile Eᵢ qui vient d'actionner son système de freinage soit prévenue de cette action. Les solutions traditionnelles impliquent des capteurs disséminés le long des infra-structures routières. Une solution fondée sur un système d'informations spontanées selon la présente invention est avantageuse, en ce qu'elle fait disparaître le besoin de ces infra-structures.

Le système d'information de proximité entre personnes vise davantage à échanger de l'information à l'état pur, plutôt que des commandes. Actuellement, les personnes qui sont dans une même salle de conférences et veulent s'échanger de l'information confidentiellement et/ou sans perturber la conférence, ne peuvent que faire circuler une note manuscrite. Une solution fondée sur un système d'informations spontanées, créé parallèlement à la conférence, entre tout ou partie des membres de celle-ci, est là aussi beaucoup plus satisfaisante.

Le Demandeur a mis au point un premier exemple d'application, dans le domaine automobile, sous la forme d'un "carrefour routier virtuel". Le "virtuel" implique ici simplement que le système ne pourrait, tel quel, être utilisé dans un carrefour "réel", mais il est parfaitement utilisable sous les contraintes limitantes qui ont été fixées, à savoir :
- on suppose que les véhicules traversent le carrefour sans changer de direction (ou route),
- on suppose qu'il ne s'agit que de véhicules automobiles,
- contrairement à l'habitude, ce carrefour est dénué de feux de signalisation.

Des représentations des feux de signalisation sont implantées à bord des véhicules. Et il y a création dynamique d'un système d'informations spontanées de la manière suivante :
- l'équipement embarqué EEᵢ de tout véhicule qui s'aproche du carrefour cherche à créer un système d'information spontanée à son voisinage. Dès qu'il existe un autre véhicule qui s'aproche du carrefour, ce système d'information spontanée va se créer effectivement.

Si le système d'information spontanée ne s'est pas créé, c'est qu'il y a un seul véhicule, et qu'il peut traverser le carrefour sans souci.

S'il y a création d'un système d'information spontanée avec donc au moins deux équipements embarqués au voisinage du carrefour, il y a création dynamique de systèmes d'informations spontanées entre tous les véhicules concernés, y compris d'éventuels véhicules entrants et sortants. D'une manière qu'il n'est pas utile de définir ici, des critères de priorité, gérés à un niveau supérieur, vont faire que seuls certains des véhicules auront le droit de passage, tandis que d'autres devront s'arrêter.

Bien que partielle, puisqu'elle ne gère que la présence des automobiles, cette application à un carrefour montre bien les avantages de l'invention.

On notera que, pour ce qui concerne la gestion de la circulation, le "carrefour" n'existe que lorsqu'un système d'informations spontanées est créé. On peut donc parler de "carrefour émergent".

Bien entendu, la présente invention est susceptible de nombreuses autres applications, notamment en téléphonie mobile, dans les réseaux locaux sans fil, ainsi qu'en informatique nomade et robotique.

Elle satisfait d'une manière particulièrement élégante le souci d'ubiquité rencontré avec les ordinateurs et autres calculateurs portables et autonomes d'aujourd'hui.

Le poste selon l'invention peut être implanté notamment dans un ordinateur portatif, sous la forme d'un boîtier mobile de télécommunication pour usager humain, sur un véhicule ou engin motorisé, ou dans un robot coopératif.

S'agissant de l'interaction entre robots, le module de communication est propre à comparer ladite durée à un seuil de manière à adresser au poste détecté dans sa zone une instruction requérant que le dispositif dans lequel il est implanté reste dans la zone.

Plus généralement, pour un mobile porteur, les moyens de traitement peuvent comprendre des moyens de gestion du guidage/déplacement du mobile porteur. Avantageusement, le module de communication locale est agencé pour échanger des données portant sur des paramètres de fonctionnement du mobile porteur. Et le module de surveillance peut utiliser, en partie au moins, de telles données émanant d'un autre poste.

Par ailleurs, grâce à l'invention il est possible de constituer des bases de données que l'on peut qualifier de "ad hoc". En effet, dans une base de données classique, les données, qui constituent les entrées de la base, sont dissociées des ressources réelles, qui sont rattachées à ces données. C'est le cas par exemple de la gestion d'un stock. La correspondance entre ces entrées et ces ressources nécessite une intervention généralement manuelle. Par exemple, si le stock évolue les entrées correspondantes sont modifiées.

Or, si l'on lie physiquement les ressources aux entrées de la base de données, l'état de cette base va évoluer en fonction de la mobilité (éloignement/rapprochement) des ressources qui la composent.

A titre d'exemple non limitatif, on peut citer la fabrication d'un produit multi-pièces, tel qu'une voiture. A chaque pièce est lié un composant électronique capable de communiquer par voie non filaire, doté de capacités de traitement et de mémorisation. Il pourra s'agir, par exemple, d'un calculateur électronique "intelligent". Lors du processus d'assemblage, le rapprochement des pièces provoque la construction d'un système d'information spontané (SIS) dont la composition évolue au cours du temps. Ce SIS constitue une base de données ad hoc qui permet, par exemple, de suivre avec précision l'évolution du processus d'assemblage. Une hiérarchie peut être envisagée parmi les composants d'un tel SIS, certains calculateurs étant alors chargés de maintenir, de façon plus spécifique, la cohérence de la base de données. Dans un tel SIS, la base de données se construit donc par coopération entre des éléments physiquement proches.

La frontière entre le "traitement applicatif" de l'unité 10 et le "traitement local porteur" de l'unité 12 peut varier selon les implémentations. On peut considérer que le "traitement applicatif" est chargé au moins des tâches coopératives qu'il y a lieu de mettre en oeuvre entre les différents équipements embarqués.

## Revendications

1. Poste de traitement de données mobile comprenant des moyens de traitement de données (10,11,12), ainsi que des moyens de communication (20,30), capables d'échanger des données de traitement avec un autre poste disposant de moyens de communication compatibles, lesdits moyens de communication (20,30) comprenant :
* un module d'émission/réception par voie d'ondes (20), capable de fonctionner selon au moins un protocole spécifique d'émission/réception de données,
* un module de surveillance (40,50) apte à surveiller une zone de dimension choisie, pour y détecter spontanément la présence d'autres postes compatibles, et
* un module de communication locale (30) apte à coopérer avec le module de surveillance, le module d'émission/réception et les moyens de traitement pour mettre en fonction ledit module d'émission/réception selon ledit protocole spécifique, en cas de détection spontanée d'un autre poste par le module de surveillance, puis initialiser une liaison dynamique avec cet autre poste, pour échanger avec celui-ci les données de traitement, selon le format du protocole spécifique, et maintenir cette liaison tant que ledit autre poste est détecté, **caractérisé en ce que** le module de communication locale (30) est apte à former un message d'initialisation, destiné au poste détecté, et comprenant un code indicateur de phase d'initialisation en communication locale, ainsi qu'au moins un code pour désigner un protocole de communication spécifique proposé pour l'échange de données, de sorte qu'à réception dudit message d'initialisation, le poste détecté puisse placer son module d'émission/réception dans un état permettant l'échange des données selon le format du protocole spécifique désigné.

2. Poste selon la revendication 1, **caractérisé en ce que** le module de communication locale (30) est agencé pour interrompre spontanément la liaison dynamique en cas de fin de détection.

3. Poste selon l'une des revendications 1 et 2, **caractérisé en ce que** le module de surveillance (40,50) est agencé pour assurer sa surveillance dans une zone définie par la portée de son module d'émission/réception (20).

4. Poste selon l'une des revendications précédentes, **caractérisé en ce que** le module de communication locale (30) engendre le message d'initialisation avec en outre un code formant identifiant temporaire, tel qu'un code aléatoire, et pouvant servir en reconnaissance mutuelle avant d'autoriser l'échange de données.

5. Poste selon l'une des revendications 1 à 4, **caractérisé en ce que** le module de surveillance (40) est agencé pour émettre de façon périodique un message spécifique de type "chien de garde", destiné à avertir de sa présence les postes qui se trouvent dans sa zone de surveillance.

6. Poste selon l'une des revendications 1 à 5, **caractérisé en ce que** le module de surveillance (50) est agencé pour déterminer l'une au moins des grandeurs du groupe comprenant: la distance qui le sépare d'un poste détecté dans sa zone de surveillance, le vecteur vitesse d'un poste mobile détecté dans sa zone de surveillance, et l'angle formé entre le vecteur vitesse du poste dans lequel il est implanté et le vecteur vitesse du poste détecté dans sa zone de surveillance.

7. Poste selon la revendication 6, **caractérisé en ce que** le module de communication locale (30) comprend un sous-module de prédiction propre à estimer, à partir de la distance et/ou des vitesses du poste dans lequel il est implanté et du poste détecté dans sa zone de surveillance, une durée représentative du temps pendant lequel ledit poste va rester dans ladite zone, et **en ce que** le module de communication est agencé pour gérer dynamiquement la liaison en fonction de ladite estimation de durée.

8. Poste selon l'une des revendications précédentes, **caractérisé en ce que** le module de surveillance est agencé pour opérer selon un traitement de type radar.

9. Poste selon l'une des revendications précédentes, **caractérisé en ce que** les moyens de traitement comprennent des moyens de gestion du guidage/déplacement du porteur, **en ce que** le module de communication locale est agencé pour échanger des données portant sur des paramètres de fonctionnement du porteur, et **en ce que** le module de surveillance utilise en partie au moins de telles données émanant d'un autre poste.

10. Poste selon l'une des revendications précédentes, **caractérisé en ce que** le module de communication locale (30) est apte à coopérer avec le module de surveillance, le module d'émission/réception et les moyens de traitement de manière à réaliser un test de ladite liaison dynamique en rapport avec des conditions relatives à l'achèvement d'au moins une partie déterminée d'un traitement applicatif.

11. Poste selon l'une des revendications précédentes, **caractérisé en ce que** les données de traitement comprennent des données rattachées à une ressource et portées par un poste attaché à ladite ressource.

12. Poste selon l'une des revendications précédentes, **caractérisé en ce que** le module de communication locale (30) est apte à coopérer avec le module de surveillance, le module d'émission/réception, les moyens de traitement et des capacités de mémorisation de manière à maintenir une base de données formées à partir d'identifiants de postes associés à des ressources, les données de traitement étant rattachées auxdites ressources.

13. Système de traitement de données, **caractérisé en ce qu'**il est constitué d'une multiplicité de postes de traitement de données selon l'une des revendications 1 à 12.

14. Système selon la revendication 13, **caractérisé en ce qu'**il constitue avec lesdits postes une base de données propre à évoluer dynamiquement en fonction des liaisons établies entre lesdits postes.

15. Système selon l'une des revendications 13 et 14, **caractérisé en ce qu'**il constitue un système d'information spontanée susceptible d'être engendré spontanément par le fait qu'au moins deux postes peuvent initialiser une liaison dynamique.

## Claims

1. Mobile data processing station, comprising data processing means (10, 11, 12), as well as communication means (20, 30), capable of exchanging processing data with another station furnished with compatible communication means, said communication means (20, 30) comprising:
* a module for transmission/reception by a wave route (20), capable of operating according to at least one specific protocol for data transmission/reception,
* a monitoring module (40, 50) able to monitor a zone of chosen dimension so as to spontaneously detect therein the presence of other compatible stations, and
* a local communication module (30) able to cooperate with the monitoring module, the transmission/reception module and the processing means so as to operate said transmission/reception module according to said specific protocol, should another station be spontaneously detected by the monitoring module, then initialize a dynamic link with this other station, so as to exchange with the latter the processing data, according to the format of the specific protocol, maintain this link so long as said other station is detected, **characterized in that** the local communication module (30) is able to form an initialization message, intended for the detected station, and comprising a code for indicating initialization phase under local communication, as well as at least one code for designating a specific communication protocol proposed for the exchange of data, so that on receipt of said initialization message, the detected station can place its transmission/reception module in a state allowing the exchange of the data according to the format of the designated specific protocol.

2. Station according to Claim 1, **characterized in that** the local communication module (30) is designed to interrupt the dynamic link spontaneously should detection end.

3. Station according to one of Claims 1 and 2, **characterized in that** the monitoring module (40, 50) is designed to carry out its monitoring in a zone defined by the range of its transmission/reception module (20).

4. Station according to one of the preceding claims, **characterized in that** the local communication module (30) generates the initialization message together moreover with a code forming a temporary identifier, such as a random code, and which can serve in mutual recognition before permitting the exchange of data.

5. Station according to one of Claims 1 to 4, **characterized in that** the monitoring module (40) is designed to transmit periodically a specific message of the "watchdog" type, intended to advise of its presence the stations which lie in its monitoring zone.

6. Station according to one of Claims 1 to 5, **characterized in that** the monitoring module (50) is designed to determine at least one of the quantities from the group comprising: the distance which separates it from a station detected in its monitoring zone, the velocity vector of a mobile station detected in its monitoring zone, and the angle formed between the velocity vector of the station in which it is installed and the velocity vector of the station detected in its monitoring zone.

7. Station according to Claim 6, **characterized in that** the local communication module (30) comprises a prediction submodule suitable for estimating, on the basis of the distance and/or the velocities of the station in which it is installed and of the station detected in its monitoring zone, a duration representative of the time for which said station will remain in said zone, and **in that** the communication module is designed to dynamically manage the link as a function of said estimation of duration.

8. Station according to one of the preceding claims, **characterized in that** the monitoring module is designed to function according to a radar-type processing.

9. Station according to one of the preceding claims, **characterized in that** the processing means comprise means for managing the guidance/movement of the carrier, **in that** the local communication module is designed to exchange data pertaining to operating parameters of the carrier, and **in that** the monitoring module uses at least in part such data emanating from another station.

10. Station according to one of the preceding claims, **characterized in that** the local communication module (30) is able to cooperate with the monitoring module, the transmission/reception module and the processing means so as to perform a test of said dynamic link concerning conditions relative to the achievement of at least one determined part of an application processing.

11. Station according to one of the preceding claims, **characterized in that** the processing data comprise data that are bound to a resource and carried by a station, which is bound to said resource.

12. Station according to one of the preceding claims, **characterized in that** the local communication module (30) is able to cooperate with the monitoring module, the transmission/reception module, the processing means and storage capabilities so as to maintain a base of data, that are formed from identifiers of stations that are associated with resources, the processing data being bound to said resources.

13. Data processing system, **characterized in that** it consists of a multiplicity of data processing stations according to one of Claims 1 to 12.

14. System according to Claim 13, **characterized in that** together with said stations it constitutes a database suitable for evolving dynamically as a function of the links established between said stations.

15. System according to one of the claims 13 and 14, **characterized in that** it constitutes a spontaneous information system that can be generated spontaneously by the fact that at least two stations can initialize a dynamic link.

## Patentansprüche

1. Mobile Datenverarbeitungsstation mit Datenverarbeitungseinrichtungen (10,11,12) sowie Kommunikationseinrichtungen (20,30), fähig Verarbeitungsdaten mit einer anderen Station auszutauschen, die über kompatible Kommunikationseinrichtungen verfügt, wobei die genannten Kommunikationseinrichtungen (20,30) umfassen:
* ein Sende-/Empfangsfunkmodul (20), fähig gemäß wenigstens eines spezifischen Daten-Sende-/Empfangsprotokolls zu arbeiten,
* ein Überwachungsmodul (40,50), fähig einen Bereich von gewählter Dimension zu überwachen, um darin spontan die Präsenz von anderen kompatiblen Stationen zu detektieren, und
* ein lokales Kommunikationsmodul (30), fähig mit dem Überwachungsmodul, dem Sende-/Empfangsmodul und den Verarbeitungseinrichtungen zu kooperieren, um im Falle der spontanen Detektion einer anderen Station durch das Überwachungsmodul das genannte Sende-/Empfangsmodul gemäß dem spezifischen Protokoll in Betrieb zu nehmen und dann eine dynamische Verbindung mit dieser anderen Station zu initialisieren, um mit ihr die Daten gemäß dem Format des spezifischen Protokolls auszutauschen, und diese Verbindung solange aufrecht zu erhalten, wie die genannte andere Station detektiert wird,
**dadurch gekennzeichnet, dass** das lokale Kommunikationsmodul (30) fähig ist, eine für die detektierte Station bestimmte Initialisierungsmitteilung zu erzeugen, die einen Initialisierungsphasenangabe-Code der lokalen Kommunikation sowie wenigstens einen Code zur Bezeichnung eines für den Datenaustausch vorgeschlagenen spezifischen Kommunikationsprotokolls umfasst, so dass die detektierte Station beim Empfang der genannten Initialisierungsmitteilung ihr Sende-/Empfangsmodul in einen Zustand versetzen kann, der den Datenaustausch gemäß dem Format des bezeichneten spezifischen Protokolls ermöglicht.

2. Station nach Anspruch 1, **dadurch gekennzeichnet, dass** das lokale Kommunikationsmodul (30) so eingerichtet ist, dass es die dynamische Verbindung im Falle des Endes der Detektion sofort unterbricht.

3. Station nach einem der Ansprüche 1 und 2, **dadurch gekennzeichnet, dass** das Überwachungsmodul (40,50) so eingerichtet ist, dass die Überwachung eines durch die Reichweite seines Sende-/Empfangsmoduls (20) definierten Bereichs gewährleistet ist.

4. Station nach einem der vorangehenden Ansprüche, **dadurch gekennzeichnet, dass** das lokale Kommunikationsmodul (30) die Initialisierungsmitteilung mit außerdem einem einen temporären Identifikator bildenden Code wie etwa einem Zufallscode erzeugt,

5. Station nach einem der Ansprüche 1 bis 4, **dadurch gekennzeichnet, dass** das Überwachungsmodul (40) eingerichtet ist, um periodisch eine spezifische, "Wachhund" genannte Mitteilung zu senden, die dazu bestimmt ist, den Stationen, die sich in seinem Überwachungsbereich befinden, seine Präsenz mitzuteilen.

6. Station nach einem der Ansprüche 1 bis 5, **dadurch gekennzeichnet, dass** das Überwachungsmodul (50) eingerichtet ist, um mindestens eine der Größen der Gruppe zu bestimmen, die umfasst: den Abstand, der es von einer in seinem Überwachungsbereich detektierten Station trennt, den Geschwindigkeitsvektor einer in seinem Überwachungsbereich detektierten mobilen Station und den Winkel zwischen dem Geschwindigkeitsvektor der Station, in die es integriert ist und dem Geschwindigkeitsvektor der in seinem Überwachungsbereich detektierten Station.

7. Station nach Anspruch 6, **dadurch gekennzeichnet, dass** das lokale Kommunikationsmodul (30) ein Voraussage-Untermodul umfasst, das fähig ist, aufgrund des Abstands und/oder der Geschwindigkeiten der Station, in die es integriert ist, und der in seinem Überwachungsbereich detektierten Station eine Zeitdauer zu bewerten, die repräsentativ ist für die Zeit, während der sich die genannte Station in dem genannten Bereich befinden wird, und dadurch**,** dass das Kommunikationsmodul eingerichtet ist, um die Verbindung in Abhängigkeit von der genannten Zeitdauerbewertung dynamisch zu steuern.

8. Station nach einem der vorangehenden Ansprüche, **dadurch gekennzeichnet, dass** das Überwachungsmodul eingerichtet ist, um gemäß einer Verarbeitung des Typs Radar zu arbeiten.

9. Station nach einem der vorangehenden Ansprüche, **dadurch gekennzeichnet, dass** die Verarbeitungseinrichtungen Steuerungseinrichtungen der Führung/Verschiebung des Trägers umfassen, dass das lokale Kommunikationsmodul eingerichtet ist, um Betriebsparameter des Trägers betreffende Daten auszutauschen, und dadurch, dass das Überwachungsmodul wenigstens teilweise solche von einer anderen Station stammende Daten benutzt.

10. Station nach einem der vorangehenden Ansprüche, **dadurch gekennzeichnet, dass** das lokale Kommunikationsmodul (30) fähig ist, mit dem Überwachungsmodul, dem Sende-/Empfangsmodul und den Verarbeitungseinrichtungen so zu kooperieren, dass es einen Test der genannten dynamischen Verbindung in Bezug auf Bedingungen wenigstens eines bestimmten Teils einer Anwendungsverarbeitung realisiert.

11. Station nach einem der vorangehenden Ansprüche, **dadurch gekennzeichnet, dass** die Verarbeitungsdaten Daten umfassen, die mit einer Ressource verknüpft und in einer mit der genannten Ressource verbundenen Station enthalten sind.

12. Station nach einem der vorangehenden Ansprüche, **dadurch gekennzeichnet, dass** das lokale Kommunikationsmodul (30) fähig ist, mit dem Überwachungsmodul, dem Sende-/Empfangsmodul, den Verarbeitungseinrichtungen und Speicherkapazitäten so zu kooperieren, dass es eine Datenbank unterhalten kann, gebildet aufgrund von Identifikatoren von mit Ressourcen verbundenen Stationen, wobei die Verarbeitungsdaten mit den genannten Ressourcen verknüpft sind.

13. Datenverarbeitungssystem, **dadurch gekennzeichnet, dass** es eine Vielzahl von Datenverarbeitungsstationen nach einem der Ansprüche 1 bis 12 umfasst.

14. System nach Anspruch 13, **dadurch gekennzeichnet, dass** es mit den genannten Stationen eine Datenbank bildet, die fähig ist, sich dynamisch zu entwickeln in Abhängigkeit von den zwischen den genannten Stationen hergestellten Verbindungen.

15. System nach einem der Ansprüche 13 und 14, **dadurch gekennzeichnet, dass** es ein Spontaninformationssystem bildet, spontan erzeugt durch die Tatsache, dass wenigstens zwei Stationen eine dynamische Verbindung initialisieren können.
